# EUROPÄISCHE PATENTSCHRIFT

(11) **EP 2 509 850 B1**
(45) Veröffentlichungstag und Bekanntmachung des Hinweises auf die Patenterteilung: **25.06.2014**
(21) Anmeldenummer: 10790764.4
(22) Anmeldetag: 10.12.2010
(51) Int. Cl.: B62D 35/00, B62D 53/08

(54) **LUFTLEITSYSTEM**
AIR CONDUCTING SYSTEM
SYSTÈME DÉFLECTEUR D'AIR

(30) Priorität: 11.12.2009 DE 102009054570
(43) Veröffentlichungstag der Anmeldung: 17.10.2012
(73) Patentinhaber: Jost-Werke GmbH, 63263 Neu-Isenburg (DE)
(72) Erfinder: ALGÜERA GALLEGO, José Manuel, 63739 Aschaffenburg (DE)
(74) Vertreter: Mehler Achler
(86) Internationale Anmeldenummer: PCT/EP2010/069335
(87) Internationale Veröffentlichungsnummer: WO 2011/070132

(56) Entgegenhaltungen:
- EP-A1- 0 406 036
- EP-A1- 1 905 674
- WO-A1-2006/029732
- DE-A1-102005 048 142
- GB-A- 2 295 587
- GB-A- 2 435 246

## Beschreibung

Die Erfindung betrifft ein Luftleitsystem für ein Zugfahrzeug und/oder Anhängerfahrzeug, wobei mindestens eines der Fahrzeuge einen Windabweiser aufweist.

Das Zugfahrzeug und das Anhängerfahrzeug bilden in zusammen gekuppeltem Zustand einen Lastzug. Lastzüge in der Form eines Sattel- oder eines Gliederzuges weisen in der Regel ein maximales Transportvolumen auf. Hierfür ist der Laderaum kastenförmig ausgestaltet, muss jedoch hinsichtlich seiner Abmessungen gesetzlichen Vorgaben genügen. Der Wunsch nach maximalem Transportvolumen einerseits und das Einhalten gesetzlicher Vorgaben bezüglich der Außenabmessungen andererseits erschweren die Gestaltung aerodynamisch günstiger Fahrzeugformen und somit eine Reduzierung des Kraftstoffverbrauches beziehungsweise der Schadstoffemissionen.

Aus dem Stand der Technik sind zur Verringerung des Luftwiderstandes Windabweiser bekannt, die auf dem Dach des Zugfahrzeugs angeordnet und in ihrer Neigung motorisch verfahrbar sind, um an unterschiedliche Bauhöhen des Aufliegers angepasst oder bei Leerfahrten möglichst flach gestellt zu werden.

Die gattungsgemäße WO 2006/029732 A1 offenbart einen derartigen Windabweiser auf dem Dach des Zugfahrzeugs eines Sattelzuges, der zudem mit einer Verschiebeeinrichtung für eine Sattelkupplung ausgestattet ist. Bei langsamer Fahrt kann die Sattelkupplung auf dem Zugfahrzeug nach hinten verfahren werden, so dass sich ein für das Rangieren und Befahren von engen Kurvenradien günstiger weiter Spalt zwischen der Vorderwand des Aufliegers und der Rückwand der Fahrerkabine einstellt. Zum Reduzieren des Luftwiderstandes bei schneller Geradeausfahrt kann dieser Spalt durch ein Verfahren der Sattelkupplung in Richtung der Fahrerkabine verkleinert und damit die einhergehenden Verwirbelungen an dem Spalt verringert werden. Der auf dem Dach angeordnete Windabweiser soll ebenfalls an das Steuergerät der Verschiebeeinrichtung angeschlossen und dadurch mit seiner Neigung an die Größe des Spaltmaßes einstellbar sein, so dass die Neigung bei einem großen Spaltmaß flacher und bei geringem Spaltmaß steiler ausgerichtet ist.

In der Praxis hat sich jedoch herausgestellt, dass die Anbringung eines auf dem Dach des Fahrerhauses befindlichen Windabweisers nicht ausreicht, den Luftwiderstand in gewünschtem Maße zu reduzieren.

Aus diesem Grund lag der Erfindung die Aufgabe zugrunde, durch weitere Maßnahmen eine Reduzierung des Luftwiderstandes herbeizuführen.

Die Aufgabe wird erfindungsgemäß mit einem Luftleitsystem nach Anspruch 1 gelöst, bei dem der Windabweiser am Heck und/oder im Frontbereich angeordnet und in Abhängigkeit der Fahrgeschwindigkeit verstellbar ist. Unter der Einbauposition "am Heck" des Fahrzeugs wird die hintere Bordwand des Ladeaufbaus verstanden, wobei der Windabweiser besonders effektiv an der oberen Kante zur Dachwand und/oder den Kanten zu den seitlichen Bordwänden angebracht sein sollte.

Unter der Einbauposition des Windabweisers "im Frontbereich" werden die Zonen verstanden, die vor dem Fahrzeug liegen und deren Ausgestaltung am Zustandekommen der Fahrzeugüberströmung beziehungsweise für die Art und Weise wie das Fahrzeug überströmt wird von Bedeutung sind.

Die angesprochenen Windabweiser haben gemeinsam, dass sie in ausgefahrener Arbeitsstellung eine Verlängerung des Zugfahrzeuges beziehungsweise Sattel- oder Gliederzuges bewirken.

Demzufolge befindet sich die Einbauposition für den Windabweiser bei Zugfahrzeugen von Gliederzügen an dem hinteren Ende des Zugfahrzeuges, wodurch eine Reduzierung des Luftwiderstandes im besonderen Maße auch bei Fahrten ohne Anhängerfahrzeug erzielt wird. Bei Fahrten mit Anhängerfahrzeug oder bei Sattelzügen ist der Windabweiser an der oberen Hinterkante des Anhängerfahrzeugs angeordnet.

Insbesondere bei schneller Autobahnfahrt kommt es zu einem massiven Druckgefälle zwischen der über das Fahrzeug hinwegströmenden Luft und dem Bereich hinter der Fahrzeugkontur, wodurch eine weit reichende Wirbelschleppe erzeugt wird. Mit Hilfe der an die Fahrgeschwindigkeit angepassten Neigung des Windabweisers lassen sich die Verwirbelungen am Heck des Fahrzeugs minimieren.

Im Frontbereich angeordnete Windabweiser sorgen für eine günstige Überströmung der dahinter liegenden Bereiche des Fahrzeugs.

Vorteilhafterweise ist der Windabweiser an eine elektronische Steuereinheit angeschlossen. Mit Hilfe der Steuereinheit kann besonders günstig die Stellung des Windabweisers angesteuert werden. Dabei ist es möglich, für die unterschiedliche Fahrsituationen entsprechende Kennlinien für den Anstellwinkel oder der Form des Windabweisers in der elektronischen Steuereinheit zu speichern. Darüber hinaus kann für das Be- und Entladen vorgesehen sein, in der Steuereinheit einen "Lademodus" zu speichern, bei dem der Windabweiser aus dem Zugangsbereich hinter dem Laderaum weggeschwenkt wird.

Die elektronische Steuereinheit sollte eine Schnittstelle aufweisen, über welche Fahrzeugsignale in die Steuereinheit übertragbar sind. Die Signale können der elektronischen Steuereinheit beispielsweise vom Fahrzeugsteuergerät bereitgestellt werden, wobei als Signale vornehmlich die tatsächliche Fahrgeschwindigkeit aber auch der Lenkwinkel und/oder die Achslast dienen.

Auf dem Zugfahrzeug ist eine Verstelleinrichtung angeordnet, mit welcher im Fahrbetrieb die Relativposition von Zugfahrzeug und Anhängerfahrzeug in der Fahrzeuglängsachse veränderbar ist. Üblicherweise wird bereits bei der Konstruktion der Fahrzeuge das Ladevolumen derart maximiert, dass die gesetzlich zulässige Gesamtlänge des Lastzuges erreicht ist. In diesem Fall würde ein heckseitig angeordneter Windabweiser in ausgeschwenkter Position zu einem Überschreiten der maximal zulässigen Fahrzeuglänge führen.

Mittels der Verstelleinrichtung, welche bei Geradeausfahrt das Anhängerfahrzeug an das Zugfahrzeug heranzieht und dadurch den Spalt zwischen beiden Fahrzeugen in aerodynamisch günstiger Weise minimiert, wird die Verkürzung der Länge des Lastzuges als Schwenkraum für den Windabweiser genutzt, ohne dass die zulässige Fahrzeuglänge überschritten wird.

Mit der in Rede stehenden bevorzugten Ausführungsform wurde auch ein Verfahren zum Reduzieren des Luftwiderstandes eines Lastzuges entwickelt, bei dem ein Windabweiser und eine Verstelleinrichtung zum Verändern der Relativposition von Zugfahrzeug und Anhängerfahrzeug in der Fahrzeuglängsachse vorgesehen sind, bei dem während der Geradeausfahrt des Lastzuges das Anhängerfahrzeug aus einer hinteren Position in eine vordere Position herangezogen und von dem Windabweiser der dadurch freiwerdende Bauraum im Heck- oder Frontbereich zum Ausschwenken genutzt wird. Hierdurch wird stets die maximal zulässige Fahrzeuglänge eingehalten.

Bei einer Bremsung oder einer Kurvenfahrt wird der Abstand zwischen den Fahrzeugen vergrößert und der Windabweiser zur Reduzierung der Gesamtlänge des Lastzuges zumindest teilweise eingefahren.

Gemäß einer günstigen Ausführungsform ist die Verstelleinrichtung eine Verschiebeeinrichtung für eine Sattelkupplung. Dabei stützt sich die Sattelkupplung mit Ihren beiden Lagerböcken auf einem Schlitten ab, der in Fahrzeuglängsrichtung auf zwei parallelen Schienen geführt und gegenüber diesen in der Regel verriegelbar ist. Die Verschiebeeinrichtung umfasst außerdem ein Stellmittel, zum Beispiel einen Hydraulikzylinder, welcher ein Verfahren des Aufliegers im Fahrbetrieb entgegen der Fahrtrichtung ermöglicht und dadurch den Auflieger an das Fahrerhaus des Zugfahrzeugs heranzieht. Vor dem Verfahren der Sattelkupplung kann über einen weiteren Stellzylinder die üblicherweise formschlüssige Verriegelung zwischen Schlitten und Schienen aufgehoben werden. Der Spalt zwischen den Fahrzeugen darf lediglich im Fahrbetrieb bei schneller Geradeausfahrt verringert werden. Beim Rangieren oder bei Panikbremsungen muss innerhalb kürzester Zeit der maximale Spalt zwischen den Fahrzeugen wieder hergestellt werden, um ein Anschlagen des Anhängerfahrzeuges an das Zugfahrzeug zu vermeiden.

Ebenso kann die Verstelleinrichtung eine Verschiebeeinrichtung für eine Anhängerkupplung sein, sofern die Erfindung an einem Gliederzug verwirklicht ist. In diesem Fall wird zunächst die Anhängerkupplung an einer Führungsschiene entgegen der Fahrtrichtung unter das Zugfahrzeug gezogen.

Sollte der Bauraum unter dem Zugfahrzeug nicht ausreichen, können anstelle der verfahrbaren Fahrzeugkupplung auch die komplementären Kupplungskomponenten des Anhängerfahrzeuges verfahrbar ausgestaltet sein.

Zweckmäßigerweise ist die Verstelleinrichtung an die Steuereinheit angeschlossen. Somit steuert eine gemeinsame Steuereinheit sowohl die Verstelleinrichtung als auch den heckseitigen Windabweiser, wodurch eine besonders zeitnahe Anpassung der Stellung des Windabweisers an die tatsächliche Position des Anhängerfahrzeugs erreicht wird.

Vorteilhafterweise ist der heckseitige Windabweiser in Klappenform ausgebildet. Bei dieser Ausführungsform schwenkt der Windabweiser um eine horizontale Achse und nähert sich in eingefahrener Position dem Heck des Laderaumes an. In dieser eingefahrenen Position weist der Sattel- oder Gliederzug seine kürzeste Fahrzeuglänge auf und erfüllt auch in der hintersten Stellung des Anhängerfahrzeuges die gesetzlichen Vorgaben bezüglich der maximal zulässigen Fahrzeuglänge. Bei vorgezogenem Anhängerfahrzeug während des Fahrbetriebes schwenkt der Windabweiser in Klappenform um seine scharnierartige Befestigung und beeinflusst die anliegende Luftströmung positiv.

Alternativ kann der Windabweiser aufblasbare Luftleitelemente umfassen. Diese können zum Beispiel über die pneumatische Versorgung des Anhängerfahrzeugs gespeist sein. Besonders bevorzugt ist eine Kombination aus der Klappenform und darunter befindlichen Luftleitelementen in Form eines Luftbalges.

Gemäß einer weiteren alternativen Ausführungsform weist der Windabweiser teleskopierbare Luftleitelemente auf. Diese sind vergleichbar mit ausfahrbaren Landeklappen an einem Flugzeugflügel und können auch in mehreren Stufen Platz sparend eingefahren werden. Ein wesentlicher Vorteil der teleskopierbaren Luftleitelemente liegt darin, dass der hinter dem Fahrzeug liegende Raum frei bleibt und beim Be- und Entladen die Luftleitelemente nicht im Weg sind.

Für den frontseitigen Windabweiser kommen ebenfalls ausfahrbare Klappensysteme in Frage. Besonders vorteilhaft sind jedoch aufblasbare Luftleitelemente, da diese im Falle eines Aufpralls dämpfend wirken.

Zum besseren Verständnis wird die Erfindung nachfolgend anhand von neun Figuren näher erläutert. Dabei zeigen die
- **Fig. 1:**: eine schematische Seitenansicht auf einen Sattelzug mit zurückgefahrenem Anhängerfahrzeug und eingefahrenen Windabweisern;
- **Fig. 2:**: eine Ansicht gemäß Fig. 1 mit vorgezogenem Anhängerfahrzeug und ausgefahrenen Windabweisern;
- **Fig. 3:**: eine schematische Seitenansicht auf einen Gliederzug mit zurückgefahrenem Anhängerfahrzeug und eingefahrenen Windabweisern;
- **Fig. 4:**: eine Ansicht gemäß Fig. 3 mit vorgezogenem Anhängerfahrzeug und ausgefahrenen Windabweisern;
- **Fig. 5:**: eine vergrößerte Seitenansicht eines am Heck angeordneten Windabweisers gemäß einer ersten Ausführungsform;
- **Fig. 6:**: eine vergrößerte Seitenansicht eines am Heck angeordneten Windabweisers gemäß einer zweiten Ausführungsform;
- **Fig. 7:**: eine vergrößerte Seitenansicht eines am Heck angeordneten Windabweisers gemäß einer dritten Ausführungsform;
- **Fig. 8:**: eine Seitenansicht eines im Frontbereich angeordneten Windabweisers gemäß einer ersten Ausführungsform und
- **Fig. 9:**: eine Seitenansicht eines im Frontbereich angeordneten Windabweisers gemäß einer zweiten Ausführungsform.

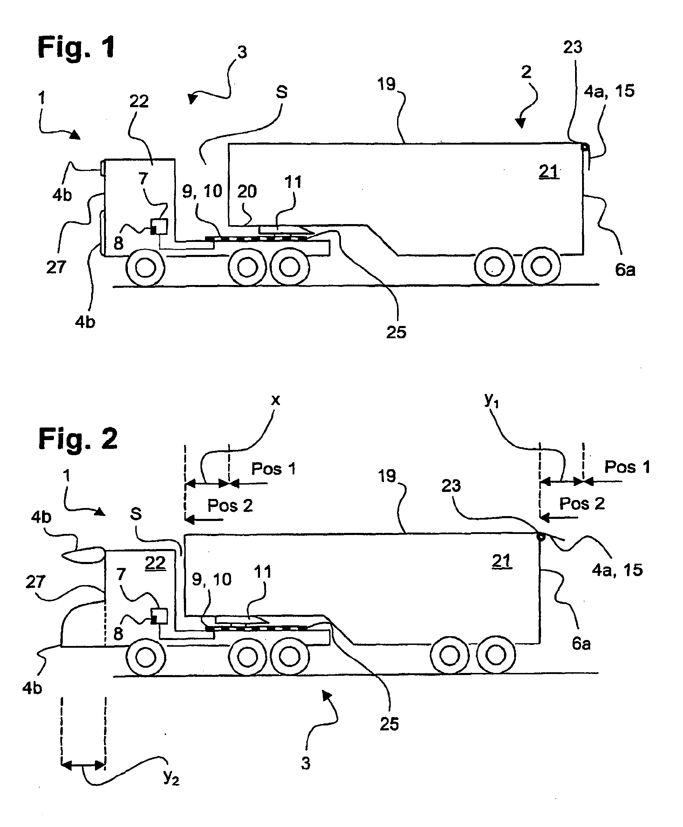

Die Figur 1 zeigt eine schematische Seitenansicht auf einen Sattelzug 3, der aus einem Zugfahrzeug 1 und einem daran über eine Sattelkupplung 11 mechanisch angekuppelten Anhängerfahrzeug 2 gebildet ist.

Das Anhängerfahrzeug 2 liegt mit einer in seinem vorderen Abschnitt befindlichen Aufliegerplatte 20 auf der Sattelkupplung 11 auf und ist zusätzlich mit einem nicht gezeigten Königszapfen auf die übliche Art und Weise mit der Sattelkupplung 11 lösbar verbunden. Für den Gütertransport weist das Anhängerfahrzeug 2 einen Laderaum 21 auf, der nach oben durch eine Dachwand 19 und an seinem hinteren Ende durch eine Heckwand 6a begrenzt ist.

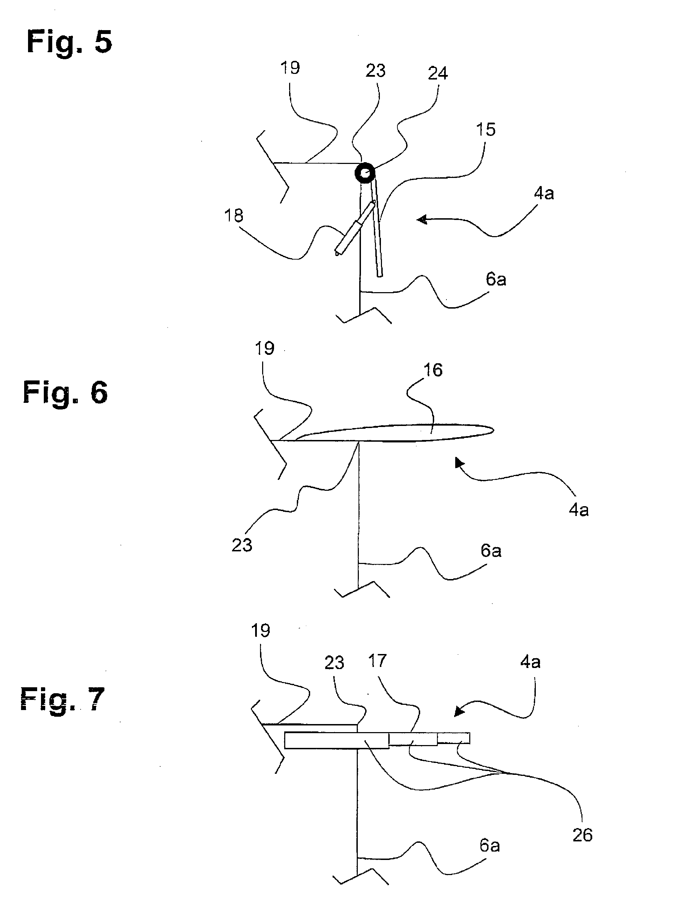

Erfindungsgemäß befindet sich an der Dachkante 23 im Übergangsbereich der Dachwand 19 zu der Heckwand 6a ein Windabweiser 4a mit einer Klappe 15. Die Klappe 15 ist schwenkbar um eine parallel zur Dachkante 23 verlaufende Schwenkachse 24 (siehe Fig. 5) gelagert. Mit Hilfe der Klappe 15 lassen sich am Heck 6a des Anhängerfahrzeuges 2 auftretende Verwirbelungen und damit der Kraftstoffverbrauch des Sattelzuges 3 verringern.

Die Darstellung der Fig. 1 zeigt die Sattelkupplung 11 in einer hinteren Position auf einer Verstelleinrichtung 9, die als Verschiebeeinrichtung 10 der Sattelkupplung 11 ausgebildet ist. Die Verschiebeeinrichtung 10 umfasst mindestens in Fahrtrichtung verlaufende Führungsschienen 25 und einen Druckmittelzylinder (nicht gezeigt), mit dem die Position der Sattelkupplung 11 auf den Führungsschienen 25 in Längsrichtung einstellbar ist. In der Position der Sattelkupplung 11 gemäß Fig. 1 weist der gesamte Sattelzug 3 seine maximale Länge auf.

Die Verschiebeeinrichtung 10 ist an eine Steuereinheit 7 angeschlossen und erhält von dieser im Fahrbetrieb ein Signal, die Sattelkupplung 11 möglichst nah an Fahrerhaus 22 des Zugfahrzeugs 1 zu verfahren. Hierdurch werden Verwirbelungen der Luftströmung aufgrund des Spaltes S zwischen Fahrerhaus 22 und Anhängerfahrzeug 2 verringert. Dieser Vorgang braucht nicht vom Fahrer initiiert zu werden, da die Steuereinheit 7 über eine Schnittstelle 8 Signale von dem Fahrzeugsteuergerät (nicht gezeigt) erhält, welche insbesondere die tatsächliche Fahrgeschwindigkeit berücksichtigen.

In der Fig. 2 ist der Sattelzug 3 im Fahrbetrieb bei Geradeausfahrt dargestellt. Die Geradeausfahrt erfolgt üblicherweise auf Autobahnen und geht meistens mit einer hohen Fahrgeschwindigkeit einher, bei welcher der Windabweiser 4a besonders wirkungsvoll die das Heck 6a umströmende Luft ableitet und Verwirbelungen minimiert.

Während der schnellen Geradeausfahrt wurde das Anhängerfahrzeug 2 über die Verstelleinrichtung 9 an das Fahrerhaus 22 aus der hinteren Position Pos 1 in die vordere Pos 2 entsprechend dem Verfahrweg x herangezogen. Dadurch verringert sich der Spalt S zwischen Zugfahrzeug 1 und Anhängerfahrzeug 2 sowie die gesamte Länge des Sattelzuges um den Verfahrweg x, so dass dem Windabweiser 4a der gleich große Verfahrweg y₁ zum Ausschwenken zur Verfügung steht, ohne dass die gesetzliche vorgeschriebene maximale Länge des Sattelzuges 3 überschritten wird.

Ergänzend zu dem am Heck 6a des Anhängerfahrzeugs 2 heraus geschwenkten Windabweiser 4a weist auch das Zugfahrzeug 1 zwei im Frontbereich 27 angeordnete Windabweiser 4b auf. In der gezeigten ausgefahrenen Arbeitsstellung verlängern diese Windabweiser 4b das Zugfahrzeug 1 und damit den gesamten Sattelzug 3 nach vorne. Dabei befindet sich einer der im Frontbereich 27 angeordneten Windabweiser 4b in einem vertikalen Abschnitt zwischen der Windschutzscheibe und dem Stoßfänger. Der zweite im Frontbereich 27 angeordnete Windabweiser 4b ist darüber positioniert und leitet den Luftstrom über das Fahrerhaus 22 hinweg.

Sofern kein Windabweiser 4a am Anhängerfahrzeug 2 vorhanden ist oder betätigt wird, steht den Windabweisern 4b im Frontbereich 27 jeweils der Verfahrweg y₂ entsprechend dem Verfahrweg x des Anhängerfahrzeugs 2 als maximaler Verstellweg zur Verfügung. Wenn sowohl ein Windabweiser 4a am Heck 6a des Anhängerfahrzeugs 2 als auch ein Windabweiser 4b im Frontbereich gemeinsam zum Einsatz kommen, kann die Summe der Verfahrwege y₁, y₂ maximal dem Verfahrweg x des Anhängerfahrzeugs 2 entsprechen.

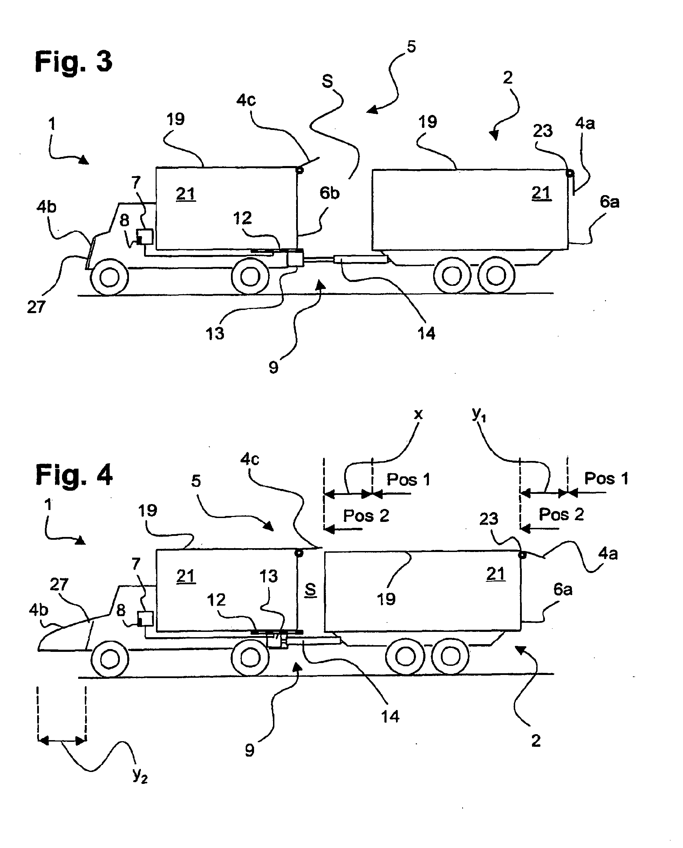

Die Fig. 3 zeigt die Erfindung an einem Gliederzug 5, der ebenfalls aus einem Zugfahrzeug 1 und einem Anhängerfahrzeug 2 besteht, in einer Ausgangsstellung. Abweichend von einem Sattelzug 3 sind sowohl das Zugfahrzeug 1 als auch das Anhängerfahrzeug 2 des Gliederzuges 5 mit einem Laderaum 21 ausgebildet. Das Anhängerfahrzeug 2 ist über eine Deichsel 14 mit einer Anhängerkupplung 13 mechanisch an das Zugfahrzeug 1 gekuppelt.

Nach Erreichen einer in der Steuereinheit 7 hinterlegten Mindestgeschwindigkeit bewegt sich ein am Heck 6b des Zugfahrzeugs 1 angeordneter Windabweiser 4c aus einer an- in eine ausgeklappte Position. Bei Fahrten des Zugfahrzeugs 1 ohne Anhängerfahrzeug 2 werden dadurch Verwirbelungen an der Heckwand 6b des Zugfahrzeugs 1 erheblich verringert.

Der im Frontbereich 27 angeordnete Windabweiser 4b befindet sich in einer Ruheposition und ist in die Kontur des Zugfahrzeuges 1 integriert.

Sofern zusätzlich ein Anhängerfahrzeug 2 angekuppelt ist, wird durch den Windabweiser 4c des Zugfahrzeugs 1 der Spalt S überbrückt und Verwirbelungen zwischen dem Zugfahrzeug 1 und dem Anhängerfahrzeug 2 minimiert.

Das Anhängerfahrzeug 2 weist an der Dachkante 23 ebenfalls einen Windabweiser 4a auf, welcher in der gezeigten Ausgangsstellung der Fig. 3 an die Heckwand 6a angeklappt ist. Dieses ist notwendig, damit die maximale Länge des Gliederzuges 5 nicht überschritten wird.

Die Fig. 4 zeigt den Gliederzug 5 bei schneller Geradeausfahrt, wobei die Anhängerkupplung 13 mittels einer Verschiebeeinrichtung 12 unter das Chassis des Zugfahrzeug 1 gezogen ist und sich dadurch das Anhängerfahrzeug 2 aus der Position Pos 1 in die Pos 2 um den Betrag des Verfahrweges x bewegt hat. Hierdurch wurde während der Fahrt die Länge des Gliederzuges 5 verringert, so dass der Windabweiser 4a ebenfalls ausgefahren werden kann. Dem Windabweiser 4a steht nunmehr der dem Betrag nach zum Verfahrweg x identische Verfahrweg y₁ zur Verfügung, ohne die maximal zulässige Länge des Gliederzuges 5 zu überschreiten. Der Verfahrweg y1 kann jedoch nicht in vollem Umfang ausgeschöpft werden, wenn zusätzlich im Frontbereich 27 der Windabweiser 4b des Zugfahrzeuges 1 ausgefahren wurde. Der Windabweiser 4b dient dazu, die ursprüngliche Kontur des Zugfahrzeuges 1 zu strecken und die Luftströmung über die dahinter befindlichen Aufbauten zu lenken. In diesem Fall darf die Summe der Verfahrwege y₁, y₂ maximal dem Verfahrweg x des Anhängerfahrzeugs 2 entsprechen.

In den Fign. 5 bis 7 sind beispielhaft Windabweiser 4a gezeigt, die in identischer Bauweise grundsätzlich auch als Windabweiser 4c an der Heckwand 6b des Zugfahrzeuges 1 angebracht sein könnten.

Die in Fig. 6 offenbarte Ausführungsform betrifft einen Windabweiser 4a in Form einer Klappe 15, die an der Dachkante 23 der aufeinander stoßenden Dachwand 19 und der Heckwand 6a schwenkbar angebracht ist. Die Schwenkachse verläuft dabei parallel zu der Erstreckung der Dachkante 23 beziehungsweise quer zur Fahrtrichtung. Der Anstellwinkel der Klappe 15 kann mittels eines Stellmittels 18 variiert werden. Bei dem Stellmittel 18 handelt es sich insbesondere um einen Fluid beaufschlagten Zylinder, besonders bevorzugt um einen Pneumatikzylinder.

In der Figur 5 ist eine alternative Ausführungsform dargestellt, bei welcher der Windabweiser 4a entsprechend der Fig. 7 als aufblasbares Luftleitelement 16 ausgebildet ist. Sobald ein ausreichender Verfahrweg y₁ (siehe Fign. 2, 4) zum Ausfahren des Windabweisers 4a zur Verfügung steht, wird das Luftleitelement 16 mit Druckluft beaufschlagt, beispielsweise aus dem Druckluftsystem des Sattel- oder Gliederzuges 3, 5. Nach Erreichen eines Mindestdruckes, stellt sich das aufblasbare Luftleitelement 16 auf und nimmt seine vorgesehene Raumform ein. Das Einfahren des Luftleitelementes 16 erfolgt durch Abblasen der darin gehaltenen Luft.

Gemäß einer dritten alternativen Ausführungsform kann der Windabweiser 4a auch als teleskopierbares Luftleitelement 17 ausgestaltet sein. In diesem Fall werden mindestens zwei Segmente 26 gegeneinander verfahren und dadurch das teleskopierbare Luftleitelement 17 in eine ausgefahrene Arbeitsstellung gebracht.

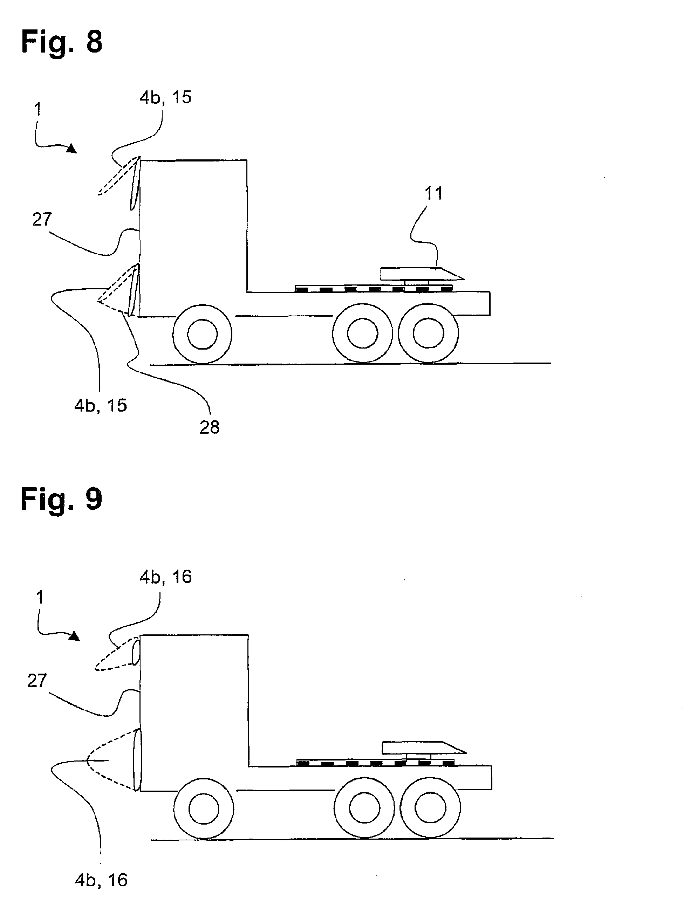

Die Figur 8 zeigt ein Zugfahrzeug 1 mit zwei übereinander angeordneten Windabweisern 4b in Klappenform 15 jeweils in eingefahrener Ruheposition und ausgefahrener Arbeitsstellung (gestrichelte Linie). Für eine besonders effektive Leitung der Luft weist der untere Windabweiser 4b zusätzlich eine Schürze 28 auf, welche durch das Ausfahren der Klappe 15 aufgespannt wird.

In der Figur 9 ist eine alternative Ausführungsform der im Frontbereich 27 befindlichen Windabweiser 4b dargestellt, welche aufblasbare Luftleitelemente 16 umfassen und durch Beaufschlagung mit Druckluft Ihre vorgesehene Form einnehmen. Diese Ausführungsform bietet bei einer Anbringung im Frontbereich 27 zusätzlich den Vorteil einer Dämpfung bei Kollisionen.

### Bezugszeichen liste

- 1: Zugfahrzeug
- 2: Anhängerfahrzeug
- 3: Sattelzug
- 4a: Windabweiser Anhängerfahrzeug
- 4b: Windabweiser Zugfahrzeug Front
- 4c: Windabweiser Zugfahrzeug Heck
- 5: Gliederzug
- 6a: Heck/Heckwand Anhängerfahrzeug
- 6b: Heck/Heckwand Zugfahrzeug
- 7: Steuereinheit
- 8: Schnittstelle
- 9: Verstelleinrichtung
- 10: Verschiebeeinrichtung Sattelkupplung
- 11: Sattelkupplung
- 12: Verschiebeeinrichtung Anhängerkupplung
- 13: Anhängerkupplung
- 14: Deichsel
- 15: Windabweiser Klappe
- 16: aufblasbare Luftleitelemente
- 17: teleskopierbare Luftleitelemente
- 18: Stellmittel
- 19: Dachwand
- 20: Aufliegerplatte
- 21: Laderaum
- 22: Fahrerhaus
- 23: Dachkante
- 24: Schwenkachse
- 25: Führungsschienen
- 26: Segmente Luftleitelement
- 27: Frontbereich
- 28: Schürze
- Pos 1: hintere Position Anhängerfahrzeug
- Pos 2: vordere Position Anhängerfahrzeug
- x: Verfahrweg Anhängerfahrzeug
- y₁: Verfahrweg Windabweiser Heck
- y₂: Verfahrweg Windabweiser Front
- S: Spalt zwischen Fahrzeugen

## Patentansprüche

1. Luftleitsystem für ein Zugfahrzeug (1) und ein Anhängerfahrzeug (2), die in zusammen gekuppeltem Zustand einen Lastzug (3,5) bilden, wobei mindestens eines der Fahrzeuge (1, 2) einen in Abhängigkeit der Fahrgeschwindigkeit verstellbaren Windabweiser (4a, 4b) aufweist, und auf dem Zugfahrzeug (1) eine Verstelleinrichtung (9) angeordnet ist, mit welcher die Relativposition von Zugfahrzeug (1) und Anhängerfahrzeug (2) in der Fahrzeuglängsachse veränderbar ist, wobei die Verstelleinrichtung (9) bei Geradeausfahrt das Anhängerfahrzeug (2) an das Zugfahrzeug (1) heranzieht und dadurch den Spalt (S) zwischen beiden Fahrzeugen (1, 2) in aerodynamisch günstiger Weise minimiert,
**dadurch gekennzeichnet,**
**dass** der Windabweiser (4a, 4b) am Heck (6a) des Anhängerfahrzeugs (2) und/oder im Frontbereich (27) des Zugfahrzeugs (1) angeordnet ist und in ausgefahrener Arbeitsstellung eine Verlängerung des Lastzuges bewirkt, wobei der Windabweiser (4a, 4b) die Verkürzung der Länge des Lastzuges (3,5) als Schwenkraum nutzt, ohne die zulässige Fahrzeuglänge zu überschreiten.

2. Luftleitsystem nach Anspruch 1, **dadurch gekennzeichnet, dass** der Windabweiser (4a, 4b, 4c) an eine elektronische Steuereinheit (7) angeschlossen ist.

3. Luftleitsystem nach Anspruch 2, **dadurch gekennzeichnet, dass** die elektronische Steuereinheit (7) eine Schnittstelle (8) aufweist, über welche Fahrzeugsignale in die Steuereinheit (7) übertragbar sind.

4. Luftleitsystem nach einem der Ansprüche 1 bis 3, **dadurch gekennzeichnet, dass** die Verstelleinrichtung (9) eine Verschiebeeinrichtung (10) für eine Sattelkupplung (11) ist.

5. Luftleitsystem nach einem der Ansprüche 1 bis 3, **dadurch gekennzeichnet, dass** die Verstelleinrichtung (9) eine Verschiebeeinrichtung (12) für eine Anhängerkupplung (13) ist.

6. Luftleitsystem nach einem der Ansprüche 1 bis 5, **dadurch gekennzeichnet, dass** die Verstelleinrichtung (9) an die Steuereinheit (7) angeschlossen ist.

7. Luftleitsystem nach einem der Ansprüche 1 bis 6, **dadurch gekennzeichnet, dass** der Windabweiser (4a, 4b, 4c) mit einer Klappe (15) ausgebildet ist.

8. Luftleitsystem nach einem der Ansprüche 1 bis 6, **dadurch gekennzeichnet, dass** der Windabweiser (4a, 4b, 4c) aufblasbare Luftleitelemente (16) umfasst.

9. Luftleitsystem nach einem der Ansprüche 1 bis 6, **dadurch gekennzeichnet, dass** der Windabweiser (4a, 4b, 4c) teleskopierbare Luftleitelemente (17) umfasst.

## Claims

1. Air conducting system for a tractor vehicle (1) and a trailer vehicle (2) which, when coupled together, form a tractor-trailer combination (3, 5), wherein at least one of the vehicles (1, 2) has an air deflector (4a, 4b) which is adjustable in dependence on the speed of the vehicle, and there is arranged on the tractor vehicle (1) an adjusting mechanism (9) by means of which the relative position of the tractor vehicle (1) and the trailer vehicle (2) can be changed in the longitudinal axis of the vehicle, wherein the adjusting mechanism (9) moves the trailer vehicle (2) towards the tractor vehicle (1) when they are travelling in a straight line and thereby minimises the gap (S) between the two vehicles (1, 2) in an aerodynamically advantageous manner,
**characterised in that**
the air deflector (4a, 4b) is arranged at the rear end (6a) of the trailer vehicle (2) and/or in the front region (27) of the tractor vehicle (1) and in the extended working position effects a lengthening of the tractor-trailer combination, wherein the air deflector (4a, 4b) uses the shortening of the length of the tractor-trailer combination (3, 5) as pivot space, without exceeding the permissible vehicle length.

2. Air conducting system according to claim 1, **characterised in that** the air deflector (4a, 4b, 4c) is connected to an electronic control unit (7).

3. Air conducting system according to claim 2, **characterised in that** the electronic control unit (7) has an interface (8) *via* which vehicle signals can be transmitted to the control unit (7).

4. Air conducting system according to any one of claims 1 to 3, **characterised in that** the adjusting mechanism (9) is a displacement mechanism (10) for a fifth wheel coupling.

5. Air conducting system according to any one of claims 1 to 3, **characterised in that** the adjusting mechanism (9) is a displacement mechanism (12) for a trailer coupling (13).

6. Air conducting system according to any one of claims 1 to 5, **characterised in that** the adjusting mechanism (9) is connected to the control unit (7).

7. Air conducting system according to any one of claims 1 to 6, **characterised in that** the air deflector (4a, 4b, 4c) is configured with a flap (15).

8. Air conducting system according to any one of claims 1 to 6, **characterised in that** the air deflector (4a, 4b, 4c) comprises inflatable air conducting elements (16).

9. Air conducting system according to any one of claims 1 to 6, **characterised in that** the air deflector (4a, 4b, 4c) comprises telescopic air conducting elements (17).

## Revendications

1. Système déflecteur d'air pour un véhicule tracteur (1) et un véhicule remorque (2) qui, à l'état accouplé, forment un train routier (3, 5), au moins un des véhicules (1, 2) présentant un déflecteur de vent (4a, 4b) réglable en fonction de la vitesse de marche, et un moyen de réglage (9) étant disposé sur le véhicule tracteur (1), avec lequel la position relative du véhicule tracteur (1) et du véhicule remorque (2) suivant l'axe longitudinal du véhicule est modifiable, le moyen de réglage (9) rapprochant le véhicule remorque (2) du véhicule tracteur (1) en cas de déplacement en ligne droite et minimisant de ce fait d'une manière avantageuse du point de vue aérodynamique l'intervalle (S) entre les deux véhicules (1, 2),
**caractérisé en ce**
**que** le déflecteur de vent (4a, 4b) est disposé à l'arrière (6a) du véhicule remorque (2) et/ou à l'avant (27) du véhicule tracteur (1) et produit, en position de travail sortie, un rallongement du train routier, le déflecteur de vent (4a, 4b) utilisant le raccourcissement de la longueur du train routier (3, 5) comme espace de pivotement, sans dépasser la longueur autorisée du véhicule.

2. Système déflecteur d'air selon la revendication 1, **caractérisé en ce que** le déflecteur de vent (4a, 4b, 4c) est raccordé à une unité de commande électronique (7).

3. Système déflecteur d'air selon la revendication 2, **caractérisé en ce que** l'unité de commande électronique (7) présente une interface (8) via laquelle des signaux de véhicule peuvent être transmis dans l'unité de commande (7).

4. Système déflecteur d'air selon l'une des revendications 1 à 3, **caractérisé en ce que** le moyen de réglage (9) est un moyen de déplacement (10) pour une sellette d'attelage (11).

5. Système déflecteur d'air selon l'une des revendications 1 à 3, **caractérisé en ce que** le moyen de réglage (9) est un moyen de déplacement (12) pour un attelage de remorque (13).

6. Système déflecteur d'air selon l'une des revendications 1 à 5, **caractérisé en ce que** le moyen de réglage (9) est raccordé à l'unité de commande (7).

7. Système déflecteur d'air selon l'une des revendications 1 à 6, **caractérisé en ce que** le déflecteur de vent (4a, 4b, 4c) est réalisé avec un volet (15).

8. Système déflecteur d'air selon l'une des revendications 1 à 6, **caractérisé en ce que** le déflecteur de vent (4a, 4b, 4c) comprend des éléments déflecteurs d'air gonflables (16).

9. Système déflecteur d'air selon l'une des revendications 1 à 6, **caractérisé en ce que** le déflecteur de vent (4a, 4b, 4c) comprend des éléments déflecteurs d'air télescopiques (17).
